# EUROPÄISCHE PATENTSCHRIFT

(11) **EP 0 937 382 B1**
(45) Veröffentlichungstag und Bekanntmachung des Hinweises auf die Patenterteilung: **14.08.2002**
(21) Anmeldenummer: 99101615.5
(22) Anmeldetag: 04.02.1999
(51) Int. Cl.: A01D 78/10

(54) **Kreiselheuwerbungsmaschine**
Rotary tedder
Faneuse rotative

(30) Priorität: 21.08.1998 DE 19837955; 20.02.1998 DE 19807082
(43) Veröffentlichungstag der Anmeldung: 25.08.1999
(73) Patentinhaber: NIEMEYER Landmaschinen GmbH, D-48477 Hörstel-Riesenbeck (DE)
(72) Erfinder: Ungruh, Josef, 48429 Rheine (DE)

(56) Entgegenhaltungen:
- EP-A- 0 539 662
- EP-A- 0 548 720
- EP-A- 0 562 664
- EP-A- 0 600 304
- WO-A-97/46076
- DE-A- 2 851 524
- DE-A- 4 128 586
- DE-U- 29 716 391

## Beschreibung

Die Erfindung betrifft eine Kreiselheuwerbungsmaschine, insbesondere einen Kreiselschwader nach dem gattungsbildenden Oberbegriff des Anspruchs 1. Dieser ist abgeleitet aus der EP 0 381 970 B1 und der EP 0465 393 B1.

Aus der EP 0 381 970 B1 ist eine Kreiselheumaschine mit längenveränderlichen, teleskopartigen, gegeneinander längsverschiebbaren und drehfest miteinander verbundenen, zweiteiligen Auslegern bekannt, die mit ihren Arbeitskreiseln gelenkig verbunden sind, und die zum Transport um in Fahrtrichtung liegende Schwenkachsen hochklappbar sind. Durch ein am Maschinengestell gelagertes Verstellmittel als Koppelstange, welche gleichzeitig gelenkig mit dem Innenteil des Auslegers gekoppelt ist, ergibt sich durch das Hochklappen der Ausleger eine Verkürzung seiner Längserstreckung, welches eine Verringerung der Transporthöhe herbeiführt.

Aus der EP 0 465 393 B1 ist ein Kreiselschwader ebenfalls mit längenveränderlichen, teleskopartigen, gegeneinander längsverschiebbaren und drehfest miteinander verbundenen, zweiteiligen Auslegern bekannt. Der Innenteil des Auslegers ist ebenfalls mit einer gelenkig angeschlagenen Koppelstange mit dem Maschinengestell verbunden, wobei die Positionierung des Anschlags der Koppelstange an dem Maschinengestell veränderbar ist. Dadurch kann die Arbeitsbreite des Kreiselschwaders verändert werden. Die Grenzen der Veränderbarkeit der Arbeitsbreite sind bauartbedingt gering in Relation zur Arbeitsbreite des Kreiselschwaders.

Weitere wesentliche Vergrößerungen der Arbeitsbreite von Kreiselschwadern sind möglich durch den Einsatz von mehrkreiseligen Großschwadern, beispielsweise mit drei oder vier Rechkreiseln.

*Aus der EP 0 600 304 B1 ist eine Heuwerbungsmaschine als zweikreiseliger Frontschwader zum Frontanbau an Traktoren in einer Ausgestaltung bekannt, die es ermöglicht, den Frontschwader in der Transportstellung gegenüber dem Traktor in eine optimale Lage zu verbringen. Dabei sind die Werkzeugkreisel des Schwaders an schwenkbaren Trägern endseitig gelagert und die schwenkbaren Träger sind dabei am jeweils anderen Ende um räumliche Schwenkachsen klappbar mit dem Tragbock verbunden. Der Tragbock seinerseits stellt die Kupplungsvorrichtung gegenüber dem Traktor dar. Die räumlich angeordneten Schwenkachsen sind dabei so ausgerichtet, dass die Werkzeugkreisel aus einer Arbeitsstellung mit etwa senkrechter Drehachse in eine Transportstellung mit etwa horizontaler Drehachse gelangen können. Wird der Abstand zwischen den räumlichen Schwenkachsen verstellbar ausgeführt, so läßt sich der Frontschwader in eine noch geringere Transportbreite überführen, bzw. es besteht umgekehrt die Möglichkeit, beim Zurückführen in die Arbeitsstellung die Schwadgröße den Gegebenheiten vorteilhaft anzupassen.*

Aufgabe der Erfindung ist es, einen 2-Kreiselschwader mit großer variabler Arbeitsbreite so zu schaffen, daß er mit geringem Aufwand wahlweise als 2-Kreiselschwader oder zu einem Großschwader, beispielsweise zu einem 4-Kreiselschwader aufrüstbar, eingesetzt werden kann.

Die Erfindung löst diese Aufgabe mit den Merkmalen des Anspruchs 1. Hinsichtlich weiterer wesentlicher Ausgestaltungen der Erfindung wird auf die Beschreibung mit deren Zeichnungen und auf die Ansprüche 2 bis 7 verwiesen.

Kreiselschwader nach der Erfindung besitzen beidseitig des Längsträgers ihres Fahrgestells, zweiteilige, d. h. einen inneren und einen äußeren Ausleger,: die mit einem Drehgelenk untereinander schwenkbeweglich verbunden sind. Durch die Schwenkbeweglichkeit des äußeren Auslegers um die Schwenkachse des Drehgelenks, wobei die Schwenkachse in der Arbeitsstellung der Rechkreisel überwiegend als Hochachse ausgebildet ist, ist der Ausleger längenveränderlich einstellbar. Das freie Ende des inneren Auslegers ist um die fahrtrichtungsparallele Schwenkachse hochklappbar an dem Längsträger angelenkt. Das freie Ende des äußeren Auslegers ist schwenkbeweglich, beispielsweise durch eine kardanische Anlenkung, mit dem Rechkreisel verbunden.

In der Betriebsstellung als Rechstellung ist der Ausleger, bedingt durch den Fahrwiderstand der Rechkreisel und die arbeitsamen Kräfte an den Rechwerkzeugen, einem Biegemoment ausgesetzt. Daher muß das Drehgelenk in diesem Betriebszustand überbrückt und festgestellt werden. Dieses geschieht vorzugsweise durch einen hydraulischen Stellantrieb, ausgeführt als Druckmittelzylinder, der einerseits zur Verstellung der Arbeitsbreite und andererseits als Feststelleinrichtung dient.

Der Druckmitteizylinder kann beispielsweise als doppeltwirkender Hydraulikzylinder mit Sperrventilen ausgeführt sein, beispielsweise als entsperrbare Zwillingsrückschlagventile, so daß der Kolben mit seiner Kolbenstange hydraulisch eingespannt und feststellbar ist.

Zusätzlich bietet diese Ausführung der Ausleger den Vorteil, durch das Abwinkeln der inneren und äußeren Ausleger um die Drehachse des Drehgelenkes die Transporthöhe des Kreiselschwaders auf ein Minimum zu reduzieren. Somit erfüllt der Stellantrieb, ausgeführt als Hydraulikzylinder, die Mehrfachfunktionen Feststelleinrichtung, Verstellung der Arbeitsbreite, Reduzierung der Transporthöhe.

Diese Art der Ausgestaltung der Ausleger ermöglicht eine große und kontinuierliche Veränderung der Arbeitsbreite eines 2-Kreiselschwaders weit über den in der Praxis üblichen Verstellbereich eines 2-Kreiselschwaders hinaus, wodurch dieser 2-Kreiselschwader als Basismaschine zur Bildung eines 4-Kreiselschwaders einsetzbar ist. Vorzugsweise wird ein derartiger 2-Kreiselschwader an seinem rückwärtigen Ende mit Kopplungspunkten zur Anhängung eines weiteren 2-Kreiselschwaders und einem Durchtrieb zur Zapfwelle des Traktors ausgestattet, von dem der angehängte 2-Kreiselschwader angetrieben werden kann.

Durch die rückwärtige Ankopplung eines weiteren 2-Kreiselschwaders an einen derartigen 2-Kreiselschwader nach der Erfindung als Basismaschine kann somit ein 4-Kreiselschwader mit etwa der doppelten Arbeitsbreite des 2-Kreiselschwaders erzeugt werden, welcher einen Großschwad als Mittelschwad ablegt.

Unabhängig von der Möglichkeit der großen Verstellbarkeit der Arbeitsbreite über das erforderliche Maß eines 2-Kreiselschwader hinaus, kann dieser Verstellmechanismus somit gleichermaßen genutzt werden zur Einstellung der Arbeitsbreite eines 2-Kreiselschwaders.

Weitere Merkmale und Vorteile der Erfindung ergeben sich aus der nachfolgenden Beschreibung und den Zeichnungen, in denen ein prinzipielles Ausführungsbeispiel eines 2-Kreiselschwaders gemäß der Erfindung schematisch, angenähert maßstäblich dargestellt ist. Es zeigen:
- Fig. 1 -: Draufsicht eines 2-Kreiselschwaders in Fahrtrichtung (F) mit eingestellter minimaler Arbeitsbreite
- Fig. 2 -: Draufsicht eines 2-Kreiselschwaders in Fahrtrichtung (F) mit eingestellter vergrößerter Arbeitsbreite
- Fig. 3 -: Draufsicht eines 2-Kreiselschwaders in Fahrtrichtung (F) in Transportstellung
- Fig. 4 -: Draufsicht eines 2-Kreiselschwaders als Basismaschine mit voll ausgeschwenkten Auslegern in maximaler Arbeitsbreite mit angehängtem 2-Kreiselschwader
- Fig. 5 -: Draufsicht eines 2-Kreiselschwaders als Basismaschine mit ausgeschwenkten, abgewinkelten Auslegern in reduzierter Arbeitsbreite mit angehängtem 2-Kreiselschwader
- Fig. 6 -: Draufsicht eines 4-Kreiselschwaders, bestehend aus Basismaschine mit maximal abgewinkelten Auslegern und angehängtem 2-Kreiselschwader in der Ausgangsstellung zum Hochklappen der Rechkreisel in die Transportstellung
- Fig. 7 -: Draufsicht eines 4-Kreiselschwaders in Fahrtrichtung (F) in Transportstellung bestehend aus Basismaschine und angehängtem 2-Kreiselschwader

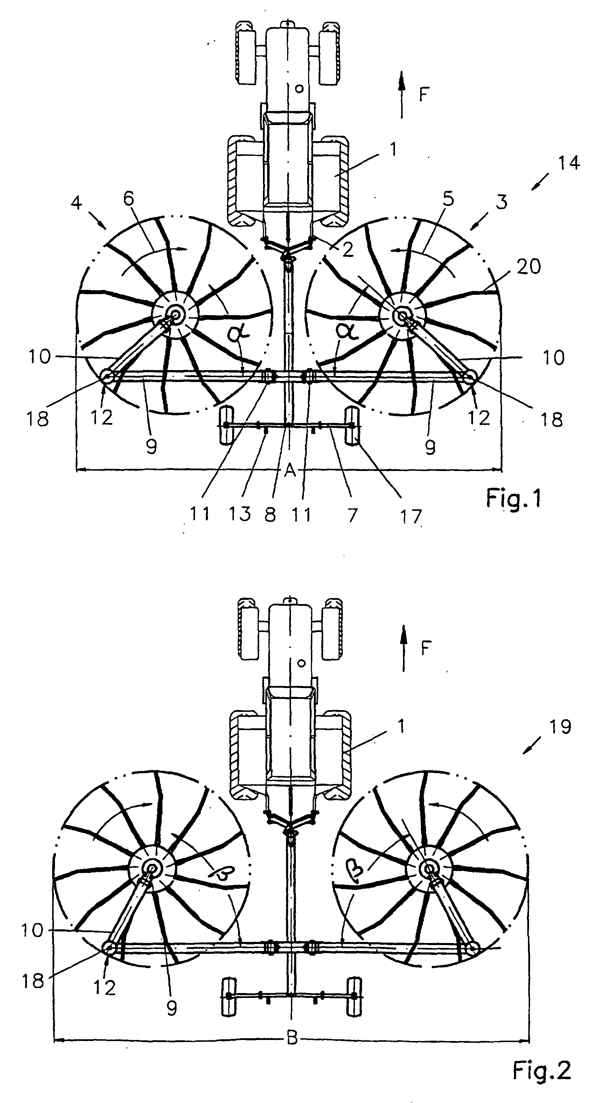

In Fig. 1 ist ein an einem Traktor (1) angehängter und von diesem angetriebener Kreiselschwader (14) in einer Draufsicht auf die Arbeitsebene in Fahrtrichtung (F) dargestellt, welcher an den unteren Kupplungspunkten des Heck-Dreipunktgestänges (2) angehängt ist. Der Kreiselschwader (14) besteht im wesentlichen aus einem Fahrgestell, bestehend aus dem Längsträger (8), dem Portalfahrwerk (7), welches über die Laufräder (17) gegenüber dem Boden abgestützt ist, den inneren Auslegern (9) und den äußeren Auslegern (10) und den Rechkreiseln (3,4). Das Portalfahrwerk (7) ist mit unteren Kupplungspunkten (13) zur möglichen Anhängung eines zweiten Kreiselschwaders ausgestattet.

In dem dargestellten Ausführungsbeispiel besteht der Kreiselschwader (14) aus zwei Rechkreiseln (3,4), die mittels Ausleger an dem Längsträger (8) des Fahrgestells über parallel zur Fahrtrichtung (F) ausgerichtete Schwenkachsen (11) an dem Längsträger (8) befestigt sind. Die Ausleger bestehen aus einem inneren Ausleger (9) und einem äußeren Ausleger (10), die in ihren Drehgelenken (12) um ihre Gelenkachse (18) schwenkbar miteinander verbunden sind. Die äußeren Ausleger (10) nehmen den Anstellwinkel (α) ein, der die minimale Arbeitsbreite (A) vorgibt. Die Gelenkachsen (18) der Drehgelenke (12) sind in ihrer Betriebsstellung als Rechstellung etwa lotrecht als Hochachsen gegenüber dem Boden ausgerichtet. An den Enden der äußeren Ausleger (10) befinden sich die gegenläufig angetriebenen Rechkreisel (3,4) mit ihren gesteuerten Zinkenarmen (20), wobei die Drehrichtung der Rechkreisel (3,4) durch Drehrichtungspfeile (5,6) gekennzeichnet sind. Die Steuerung der Zinkenarme (20) geschieht in bekannter Weise durch Rollenhebel, welche in ihrer Umlaufbahn als Kurvenbahn um die Rotationsachse der Rechkreisel (3,4) geführt sind.

Durch Verschwenken der äußeren Ausleger (10) mit ihren Rechkreiseln (3,4), um die Gelenkachsen (18) mittels Stellantriebe, beispielsweise ausgebildet als druckölbeaufschlagte Hydraulikzylinder, die aus Gründen der Übersichtlichkeit nicht näher dargestellt sind, kann durch Veränderung des Anstellwinkels (α) die Arbeitsbreite (A) stufenlos verändert werden.

In Fig. 2 ist die Draufsicht eines 2-Kreiselschwaders gemäß Fig. 1 in Fahrtrichtung (F) mit eingestellter vergrößerter Arbeitsbreite (B) dargestellt, wobei gegenüber der Fig. 1 der Anstellwinkel (α) in den vergrößerten Anstellwinkel (β) überführt ist.

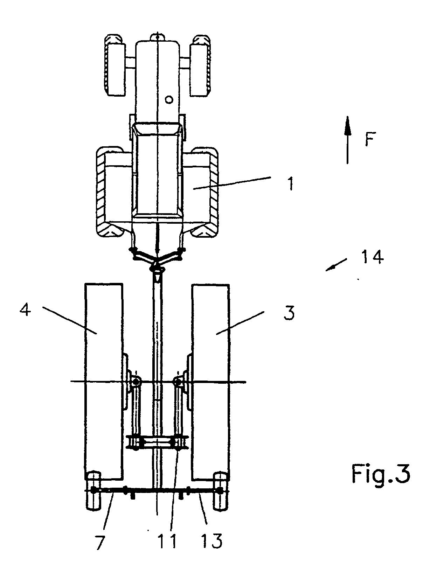

Fig. 3 zeigt die Draufsicht eines 2-Kreiselschwaders gemäß Fig. 1 und 2 in Fahrtrichtung (F) mit hochgeklappten Rechkreiseln (3,4) in Transporstellung.

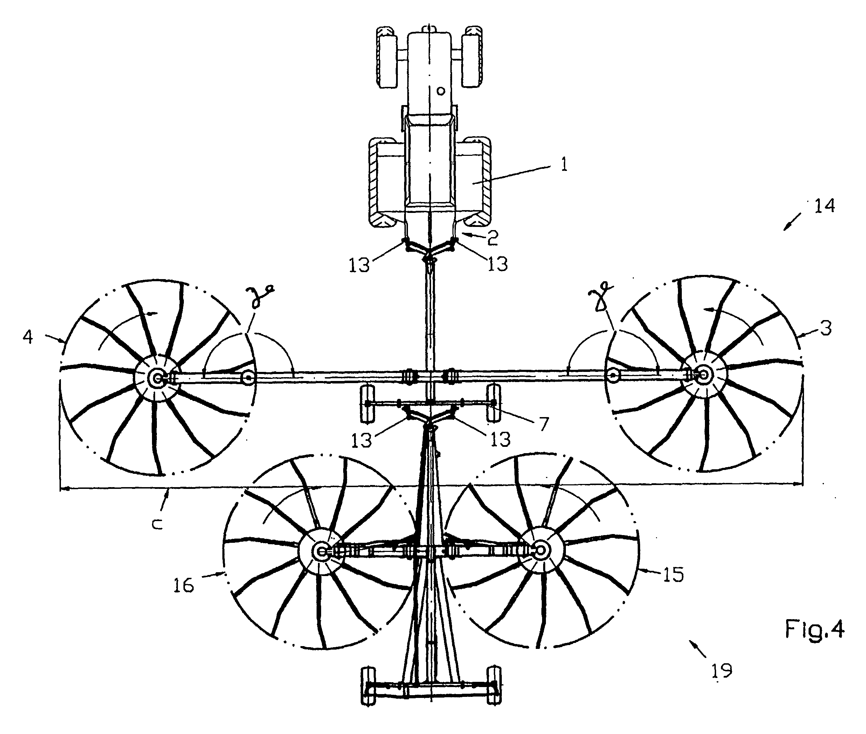

In Fig. 4 ist die Draufsicht eines 2-Kreiselschwaders (14) als Basismaschine mit voll ausgeschwenkten äußeren Auslegern (10) mit dem Anstellwinkel (γ) (γ = 180°) in maximaler Arbeitsbreite (C) dargestellt. Zusätzlich ist an die Basismaschine an den Kupplungspunkten (13) ein 2-Kreiselschwader (19); mit seinen Rechkreiseln (15,16) angehängt, der von dem Traktor (1) mitangetrieben wird. Da die äußeren Rechkreisel (3,4) der Basismaschine den Rechkreiseln (15,16) des angehängten 2-Kreiselschwaders zuarbeiten, bilden sie gemeinsam einen Großschwad als Mittelschwad.

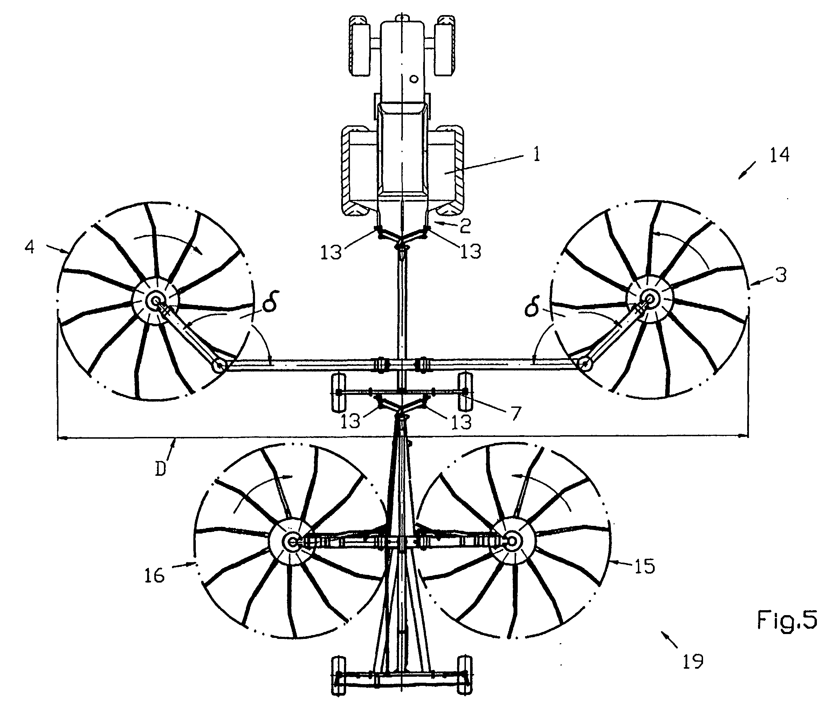

In Fig. 5 ist die Draufsicht eines 2-Kreiselschwaders (14) als Basismaschine mit ausgeschwenkten, abgewinkelten, äußeren Auslegern (10) in reduzierter Arbeitsbreite (D) mit angehängtem 2-Kreiselschwader (19) dargestellt, wobei gegenüber der Fig. 4 der Anstellwinkel (γ) in den verkleinerten Anstellwinkel (δ) überführt ist.

Dieses ist von Vorteil bei besonders dichtem Futterbestand, so daß damit die Futtermenge des zu bildenden Schwades variabel gestaltet werden kann.

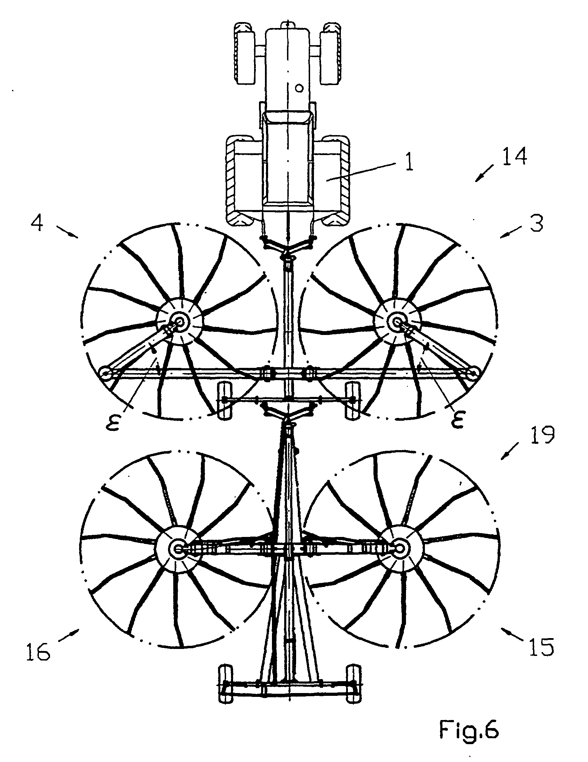

Fig. 6 zeigt die Draufsicht eines 4-Kreiselschwaders, bestehend aus der Basismaschine (14) mit maximal abgewinkelten äußeren Auslegern, bei minimalem Anstellwinkel (ε) und angehängtem 2-Kreiselschwader (19) in der Ausgangsstellung zum Hochklappen der Rechkreisel (3,4;15,16) in die Transportstellung.

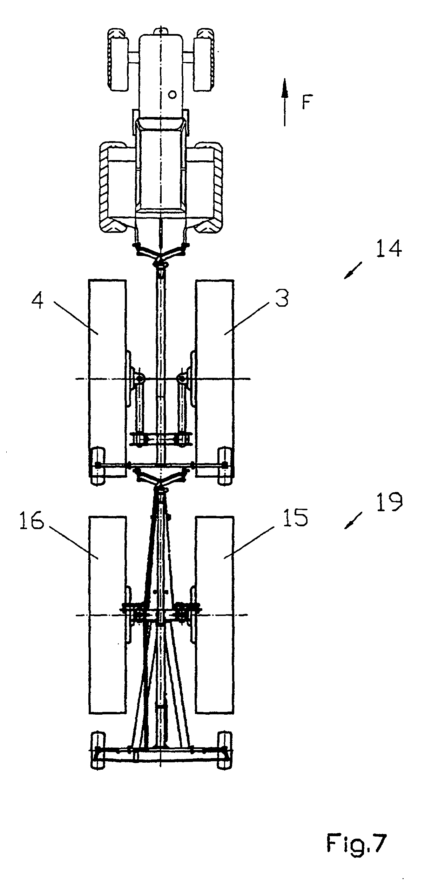

In Fig. 7 ist die Draufsicht eines 4-Kreiselschwaders in Fahrtrichtung (F) in Transportstellung bestehend aus Basismaschine (14) und angehängtem 2-Kreiselschwader (19) mit hochgeklappten Zinkenkreiseln (3,4;15,16) dargestellt.

Durch diese Ausführungsform eines Kreiselschwaders nach der Erfindung kann durch die Ausbildung der Ausleger ein 4-Kreiselschwader gebildet werden, der eine große stufenlos verstellbare Arbeitsbreite aufweist, die in Bezug auf die minimale Arbeitsbreite etwa verdoppelt werden kann.

Diese besonders vorteilhafte Ausgestaltung eines Kreiselschwaders mit Auslegern nach der Erfindung kann in Verbindung mit einem weiteren angehängten Kreiselschwader in einer Standardausführung eine Mehrkreiselmaschine mit großer und variabler Arbeitsbreite gebildet werden.

Ein weiterer Vorteil dieser Art der Ausgestaltung der Ausleger besteht darin, daß die Transporthöhe des Kreiselschwaders erheblich verringert werden kann.

### Bezugszeichenliste

- 1: Traktor
- 2: Heck-Dreipunktgestänge
- 3: Rechkreisel, rechts
- 4: Rechkreisel, links
- 5: Drehrichtungspfeil, linksdrehend
- 6: Drehrichtungspfeil, linksdrehend
- 7: Portalfahrwerk
- 8: Längsträger des Fahrgestells
- 9: innerer Ausleger
- 10: äußerer Ausleger
- 11: Schwenkachse
- 12: Drehgelenk
- 13: Untere Kupplungspunkte
- 14: Kreiselschwader
- 15: Rechkreisel, rechts, angehängter Schwader
- 16: Rechkreisel, links, angehängter Schwader
- 17: Laufräder
- 18: Gelenkachse
- 19: Kreiselschwader, angehängt
- 20: Zinkenarme
- 21: Kreiselachse
- 22: Druckmittelzylinder

- A: Arbeitsbreite
- B: Arbeitsbreite
- C: Arbeitsbreite
- D: Arbeitsbreite
- F: Fahrtrichtung

- α: Anstellwinkel
- β: Anstellwinkel
- γ: Anstellwinkel
- δ: Anstellwinkel
- ε: Anstellwinkel

## Patentansprüche

1. Kreiselschwader zum Anhängen an Traktoren, mit *zwei* um etwa vertikale Rotationsachsen angetriebene auf Stützräderri gegenüber dem Boden abgestützten Rechkreisel (3,4), die an längenveränderlichen Auslegern angelenkt sind, wobei die Ausleger an den Längsträgem eines Fahrgestells um in Fahrtrichtung (F) liegende Schwenkachsen (11) aus ihrer Betriebsstellung in eine Transportstellung hochklappbar sind, **dadurch gekennzeichnet, daß** mindestens ein Ausleger oder jeder Ausleger aus einem inneren Ausleger (9) und einem äußeren Ausleger (10) besteht, wobei der innere Ausleger (9) und der äußere Ausleger (10) mittels eines Drehgelenks (12) schwenkbeweglich um dessen Gelenkachse (18) miteinander verbunden sind und *daß die Ausleger (9,10) des Kreiselschwaders (14) so ausgebildet sind, daß die maximale Arbeitsbreite (C) in Bezug auf die minimale Arbeitsbreite (A) etwa verdoppelt werden kann und daß der Kreiselschwader (14) mit Kupplungspunkten (13) ausgestattet ist, die es ermöglichen, einen zweiten Kreiselschwader (19) derart anzukoppeln, daß beide Kreiselschwader (14 und 19) gemeinsam einen Vierkreiselschwader bilden derart, daß die gekoppelten Kreiselschwader gemeinsam einen Großschwad bilden können.*

2. Kreiselschwader nach Anspruch *1*, **dadurch gekennzeichnet, daß** der innere Ausleger (9) an seinem freien Ende horizontal schwenkbeweglich um die Schwenkachse (11) an dem Längsträger (8) des Fahrgestells und der äußere Ausleger (10) an seinem freien Ende schwenkbeweglich an einem Rechkreisel (3 oder 4) angelenkt ist.

3. Kreiselschwader nach Anspruch *2*, **dadurch gekennzeichnet, daß** die Gelenkachse (18) des Drehgelenks (12) in ihrer Betriebsstellung als Rechstellung eine überwiegend vertikale Ausrichtung als Hochachse einnimmt.

4. Kreiselschwader nach mindestens einem der Ansprüche 1 bis *3*, **dadurch gekennzeichnet, daß** der Ausleger mit einer entsperrbaren Feststelleinrichtung ausgestattet ist, welche das Drehgelenk (12) überbrücken kann und damit dessen Schwenkbeweglichkeit wahlweise unterbinden oder freigeben kann.

5. Kreiselschwader nach Anspruch *4*, **dadurch gekennzeichnet, daß** die Feststelleinrichtung des Drehgelenks (12) als fluidbeaufschlagter Druckmittelzylinder ausgeführt ist, dessen Kolben innerhalb seines Stellbereichs mittels Sperrventile feststellbar ist.

6. Kreiselschwader nach Anspruch *5*, **dadurch gekennzeichnet, daß** der Druckmittelzylinder als Stellantrieb zur Veränderung der Arbeitsbreite und/oder zur Verringerung der Transporthöhe eines Kreiselschwaders dient.

7. Kreiselschwader nach mindestens einem der Ansprüche 1 bis *4*, **dadurch gekennzeichnet, daß** die Veränderung der Arbeitsbreite (A,B) durch die Verschwenkbarkeit mindestens eines äußeren Auslegers (10) um dessen Gelenkachse (18) erfolgt.

## Claims

1. Rotary rakes to be trailed by tractors, with two rotors (3,4) driven around approximately vertical rotary axes and supported on the soil on support wheels, coupled to variable length extension arms, these extension arms being designed to hinge up on the longitudinal carrier beams of a travelling gear to a transport position through swivel axes (11) extended in the direction of travel (F), **characterised in that** at least one extension arm or each extension arm is composed of an inner extension arm (9) and one outer extension arm (10), the inner extension arm (9) and the outer extension arm (10) being interconnected by means of a rotary joint (12) to swivel around its articulated axle (18) and that the extension arms (9, 10) of the rotary rake (14) are designed such that the maximum working width (C) in relation to the minimum working width (A) can be approximately doubled, and that the rotary rake (14) is equipped with coupling points (13) which permit to couple a second rotary rake (19) such that both rotary rakes (14 and 19) together form a four rotary rake **in that** way that the coupled rotary rakes can jointly form a large swath.

2. Rotary rake according to claim 1, **characterised in that** the inner extension arm (9) is coupled to the longitudinal beam (8) of the travelling gear at its free end, horizontally swivelling around the swivel axle (11) and that the outer extension beam (10) at its free end is swivellably coupled to a rake (3 or 4).

3. Rotary rake according to claim 2, **characterised in that** in its operating position as a rake position, the articulated axle (18) of the rotary joint (12) is mostly vertically arranged as a vertical axis.

4. Rotary rake according to at least one of claims 1 to 3, **characterised in that** the extension beam is equipped with an unlockable locking device intended to bridge the rotary joint (12) to be capable of optionally locking or freeing its swivelling movement.

5. Rotary rake according to claim 4, **characterised in that** the locking device of the rotary joint (12) is designed as a fluid pressurised hydraulic oil cylinder, the piston of which can be locked within its adjustment range by means of locking valves.

6. Rotary rake according to claim 5, **characterised in that** the hydraulic oil cylinder is used as an actuator to change the working width and/or to reduce the transport height of a rotary rake.

7. Rotary rake according to at least one of the claims 1 to 4, **characterised in that** the working width (A,B) is changed by the swivellability of at least one outer extension beam (10) by its articulated axle (18).

## Revendications

1. Andaineuse à rotors destinée à être accrochée à un tracteur et comportant deux rotors de râtelage (3, 4) entraînés en rotation autour d'axes sensiblement verticaux et s'appuyant sur le sol par des roues d'appui, ces rotors étant articulés à des bras de longueur réglable, les bras pouvant être relevés par rapport aux poutres longitudinales d'un châssis autour d'axes de basculement (11) situés dans la direction de déplacement (F) à partir de leur position de travail dans une position de transport, **caractérisée en ce qu'**au moins un bras ou chaque bras se compose d'un bras intérieur (9) et d'un bras extérieur (10),le bras intérieur (9) et le bras extérieur (10) étant reliés l'un à l'autre par une articulation de rotation (12), pour pivoter autour de cet axe d'articulation (18) et les bras (9, 10) de l'andaineuse à rotors (14) sont réalisés pour que la largeur maximale de travail (C) puisse être sensiblement doublée par rapport à la largeur de travail minimale (A) et l'andaineuse (14) est équipée de points d'attelage (13) permettant d'associer une seconde andaineuse à rotors (19) pour que les deux andaineuses (14, 19) constituent, en combinaison, une andaineuse à quatre rotors et que les deux andaineuses à rotors, couplées, puissent former un grand andain.

2. Andaineuse à rotors selon la revendication 1, **caractérisée en ce que** le bras inférieur (9) est monté de manière basculante horizontalement à son extrémité libre autour de l'axe de basculement (11) sur la poutre longitudinale (8) du châssis et que le bras extérieur(10) soit articulé à son extrémité libre de manière pivotante à un rotor de râtelage (3 ou 4).

3. Andaineuse à rotors selon la revendication 2, **caractérisée en ce que** l'axe d'articulation (18) de l'articulation de rotation (12) présente , dans sa position de fonctionnement correct, un alignement principalement vertical pour son axe montant.

4. Andaineuse à rotors selon au moins l'une quelconque des revendications 1 à 3, **caractérisée en ce que** le bras est équipé d'une installation de blocage déverrouillable permettant de contourner l'articulation de rotation (12) et d'interdire ou de libérer au choix sa mobilité en pivotement.

5. Andaineuse à rotors selon la revendication 4, **caractérisée en ce que** l'installation de blocage de l'articulation de rotation (12) est réalisée sous la forme d'un vérin hydraulique dont le piston peut être bloqué dans sa plage de réglage par une vanne de blocage.

6. Andaineuse à rotors selon la revendication 5, **caractérisée en ce que** le vérin est utilisé comme actionneur pour modifier la largeur de travail et/ou pour réduire la hauteur de transport de l'andaineuse.

7. Andaineuse à rotors selon au moins l'une quelconque des revendications 1 à 4, **caractérisée en ce qu'**on modifie la largeur de travail (A, B) en pivotant au moins un bras extérieur (10) autour de son axe d'articulation (18).
